Europäisches Patentamt

European Patent Office

Office européen des brevets

(11) Veröffentlichungsnummer: **0 158 136**
**A1**

(12) **EUROPÄISCHE PATENTANMELDUNG**

(21) Anmeldenummer: **85102774.8**

(22) Anmeldetag: **12.03.85**

(51) Int. Cl.⁴: **A 61 C 17/02**

(30) Priorität: **15.03.84 DE 3409543**

(43) Veröffentlichungstag der Anmeldung:
**16.10.85 Patentblatt 85/42**

(84) Benannte Vertragsstaaten:
**AT BE CH DE FR GB IT LI LU NL SE**

(71) Anmelder: **Firma Medtronic GmbH**
**Medizinisch-elektronische Geräte**
**Am Buchstein 29**
**D-6392 Usingen 2(DE)**

(72) Erfinder: **Simon, Hubert**
**Am Mühlengrund 6**
**D-6393 Wehrheim 2(DE)**

(74) Vertreter: **Graf, Helmut, Dipl.-Ing. et al,**
**Greflinger Strasse 7 Postfach 382**
**D-8400 Regensburg(DE)**

(54) **Ultraschallgerät, insbes. ultraschallbetriebenes Dentalgerät.**

(57) Ein Ultraschallgerst, insbesondere ein im Ultraschall-Bereich arbeitendes Dentalgerät zum Reinigen, Polieren und/oder Schleifen, besteht aus einem eine Arbeitsfläche bzw. einen Arbeitsbereich aufweisenden Werkzeug (5) sowie aus einer Werkzeughalterung, insbesondere Dentalhandstück, in welcher bzw. in welchem zur Erzeugung einer mechanischen Schwingung im Ultraschallbereich ein elektro-mechanischer Wandler vorgesehen ist, mit dem das Werkzeug kraftschlüssig verbunden ist.

Es zeichnet sich dadurch aus, daß das Werkzeug zumindest an seinem die Arbeitsfläche bildenden Ende von einer Vielzahl zu einem Bündel (7) zusammengefaßten Einzeldrähten aus Stahl besteht.

Fig.1

EP 0 158 136 A1

## Ultraschallgerät, insbes. ultraschallbetriebenes Dentalgerät

Die Erfindung bezieht sich auf ein Ultraschallgerät, insbes. auf ein im Ultraschall-Bereich arbeitendes Dentalgerät, zum Reinigen, zum Polieren und/oder zum Schleifen, bestehend aus einem eine Arbeitsfläche aufweisenden Werkzeug sowie aus einer Werkzeughalterung, vorzugsweise aus einem Dental-Handstück, in welcher bzw. in welchem zur Erzeugung einer mechanischen Schwingung im Ultraschallbereich ein elektro-mechanischer Wandler vorgesehen ist, mit dem das Werkzeug kraftschlüssig verbunden ist.

Bekannt sind Geräte zur Entfernung von Zahnsteinen und Ablagerungen an Zähnen. Bei diesen Geräten wird das verwendete Werkzeug entweder durch ein von Druckluft angetriebens Vibratorsystem oder aber durch einen elektro-mechanischen Wandler betätigt, der mechanische Schwingungen im Ultraschallbereich erzeugt und durch elektrische Impulse oder durch ein anderes Wechselspannungssignal angesteuert wird. Die bei diesen bekannten Geräten verwendeten Werkzeuge bzw. Werkzeugeinsätze besitzen in der Regel eine spitz- oder meißelförmig auslaufende Arbeitsfläche bzw. einen spitzen oder meißelförmigen Arbeitsbereich. Den bekannten Instrumenten und den hierbei verwendeten Werkzeugen haftet vor allem der Nachteil an, daß mit den Werkzeugen nur eine punktförmige Behandlung bzw. Reinigung möglich ist, und zwar mit der Gefahr, daß durch zu hohe Schwingungsenergie sowie durch falsche Anwendungs- und Arbeitstechnik Fissuren und andere Schäden an Zähnen verursacht werden können. Außerdem besteht bei der Anwendung eines spitz zulaufenden Werkzeuges im Interdentalraum immer die Gefahr eines Werkzeugbruches in Folge von Verkantung oder anderer unsachgemäßer Werkzeugführung.

Der Erfindung liegt die Aufgabe zugrunde, ein Ultraschallgerät, insbes. ein im Ultraschall-Bereich arbeitendes Dentalgerät aufzuzeigen, welches die voranstehend genannten Nachteile vermeidet und durch entsprechende Ausbildung des Werkzeuges vor allem auch für eine großflächige Behandlung im okklusalen und interdentalen Bereich geeignet ist.

Zur Lösung dieser Aufgabe ist ein Ultraschallgerät der eingangs geschilderten Art erfindungsgemäß so ausgebildet, daß das Werkzeug zumindest an seinem die Arbeitsfläche bildenden Ende aus einer Vielzahl von zu einem Bündel zusammengefaßten Einzeldrähten aus Stahl besteht.

Durch diese flexiblen Stahldrähte, deren Härte den entsprechenden Erfordernissen angepaßt bzw. gewählt werden kann und die einen verhältnismäßig geringen Einzeldrahtdurchmesser aufweisen, entsteht eine bürstenartige Struktur, so daß gegenüber der bisher nur punktförmig auf eine Arbeitsfläche, z.B. auf einen Zahn einwirkenden Schwingungsenergie eine vielflächige Verteilung der Einwirkungskraft auf die zu bearbeitende Fläche bzw. auf den Zahn zur Geltung kommt.

.Die bei dem erfindungsgemäßen Ultraschallgerät bzw. bei der erfindungsgemäßen Ausgestaltung des Werkzeuges für ein solches Gerät erhaltene großflächige Reinigungs-, Polier- oder/oder Schleif- bzw. Schabwirkung ist vor allem auch auf die eigenständigen Taumelbewegungen zurückzuführen, die die einzelnen Stahldrähte entsprechend ihrer vorgegebenen Härte und Länge ausführen. Durch diese ineinander übergehenden kreis-, ellipsen-und/oder geradlinigen Bewegungen der den Arbeitsbereich des Werkzeuges bildenden Stahldrähte wird (z.B auch unter Zuhilfenahme einer Schleifpaste) eine schnelle, sanfte und polierende Oberflächenreinigung erzielt. Durch entsprechende Wahl der Länge der einzelnen Stahldrähte läßt sich beispielsweise als Arbeitsbereich des Werkzeuges eine bürstenartige Struktur erreichen, bei der die Länge die einzelnen Stahldrähte zur Mitte des Bündels hin zunimmt, so daß sich für das Bündel eine Art Büschelform ergibt und somit mit den zur Mitte hin länger werdenden Stahldrähten eine besonders einfache Reinigung oder Behandlung der Zwischenräume zwischen Zähnen möglich wird. Sofern die Stahldrähte im wesentlichen gleiche Länge aufweisen und damit die Arbeitsfläche des Arbeitsbereiches des Werkzeuges im wesentlichen geradflächig ausgebildet ist, ergibt sich die Möglichkeit einer einfachen und wirkungsvollen großflächigen Behandlung, z.B. Reinigung von Zähnen und deren Kauflächen einschließlich eventueller Unebenheiten und Füllungen.

Die Erfindung wird im folgenden anhand der Figuren an Ausführungsbeispielen näher erläutert. Es zeigen:

Fig. 1 in schematischer Darstellung und in Seitenansicht einen Werkzeugeinsatz bzw. ein Werkzeug entsprechend der Erfindung zusammen mit einem zahnärztlichen Handstück, bei dem von diesem Handstück abgenommenen Werkzeug;

Fig. 2 eine weitere Ausführungsform des Werkzeuges nach der Erfindung.

In den Figuren ist 1 ein zahnarztliliches Handstück, welches im Inneren unter anderem einen elektro-mechanischen Wandler 2 zur Erzeugung einer mechanischen Schwingungsbewegung im Ultraschallbereich aufweist. Dieser Wandler 2 bzw. dessen mechanisch bewegter Teil besitzt ein Kupplungsstück 3, mit welchem mit Hilfe eines Gegenkupplungsstückes 4 ein Werkzeug 5 kraftschlüssig verbunden werden kann. Das Werkzeug 5 dient zur Oberflächenreinigung von Zähnen, d.h. beispielsweise zur Zahnsteinentfernung, und zwar ggfs. auch unter Verwendung einer geeigneten Schleifpaste zu einer großflächigen, polierenden Reinigung von Zähnen, insbes. auch von Kauflächen von Zähnen einschließlich deren Unebenheiten und Füllungen.

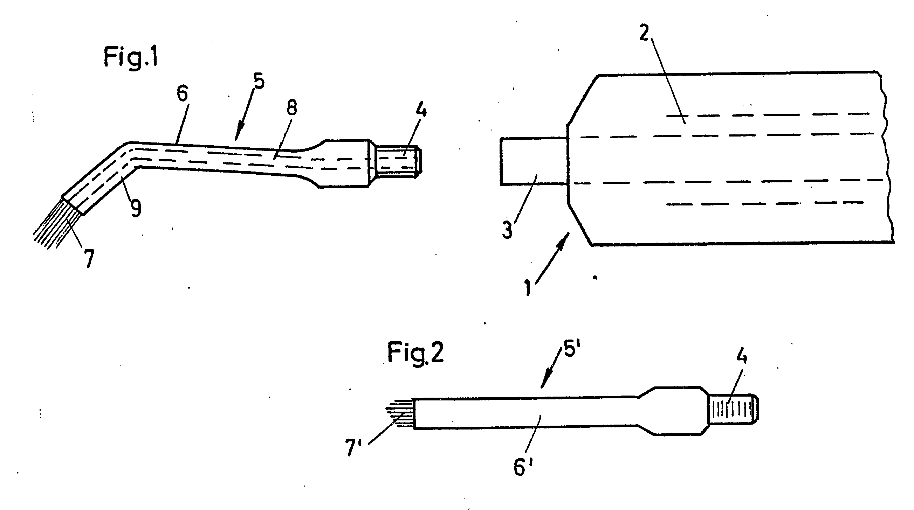

Das Werkzeug 5, welches mit seinem mit einem Außengewinde versehenen Gegenkupplungsstück 4 zur kraftschlüssigen Verbindung mit dem Kupplungsstück 3 in ein dort vorgesehenes Innengewinde einschraubbar ist, besteht bei der in der Fig. 1 dargestellten Ausführungsform aus einem Rohrstück 6, welches an seinem dem Gegenkupplungsstück 4 entfernt liegenden Ende bei 9 abgewinkelt ist. An diesem abgewinkelten Ende ist am Rohrstück 6 ein Bündel 7 bestehend aus einer Vielzahl von rostfreien, federharten Stahldrähte befestigt, die bei der in der Fig. 1 dargestellten Aus-

führungsform jeweils mit gleicher Länge über das dem Gegenkupplungsstück 4 entfernt liegende abgewinkelte Ende des Rohrstückes vorstehen. Die das Bündel 7 bzw. eine bürstenartige Struktur bildenden Stahldrähte sind kraftschlüssig in dem abgewinkelten Ende 6´ des Rohrstückes 6 gehalten und besitzen einen gleichen oder aber teilweise unterschiedlichen, für die Reinigung eines Zahnes erforderlichen Härtegrad, wobei bei der dargestellten Ausführungsform die einzelnen Stahldrähte vorzugsweise einen Einzeldrahtdurchmesser von 0,2 bis 0,3 mm besitzen.

Das Rohrstück 6 ist in seinen Abmessungen und dabei insbes. auch in seinen Längenabmessungen so gewählt, daß dieses Rohrstück bzw. das Werkzeug 5 nach der Befestigung am Handstück 1 zusammen mit dem in diesem Handstück vorgesehenen mechanisch schwingenden Teil des Wandlers 2 sowie vor allem auch zusammen mit dem Kupplungsstück 3 Teil eines vorzugsweise im Bereich von 18 - 40 kHz auf Resonanzfrequenz betriebenen Ultraschall-Längsschwingers ist. Im Inneren besitzt das Rohrstück 6 einen durchgehenden, vom Gegenkupplungsstück 4 bis an das Bündel 7 reichenden und beidseitig offenen Kanal 8, über welchen in an sich bekannter Weise über das Handstück 1 ein Kühlmittel, vorzugsweise ein flüssiges Kühlmittel (wie beispielsweise Wasser) oder aber ein flüssiges Schleif- oder Poliermittel (z.B. mit Wasser vermischtes Schleif- oder Poliermittel) an den vom Bündel 7 gebildeten Arbeitsbereich des Werkzeuges 5 und damit an die zu reinigende, zu schleifende oder zu polierende Zahnfläche herangeführt werden kann.

Fig. 2 zeigt ein Werkzeug 5´, welches sich von dem Werkzeug 5 der Fig. 1 im wesentlichen dadurch unterscheidet, daß das Rohrstück 6 nicht abgewinkelt ist und an seinem dem Gegenkkupplungsstück 4 entfernt liegenden Ende ein eine borstenartige Struktur bildendes Bündel 7´ aus Stahldrähten trägt, die unterschiedlich lang sind bzw. mit unterschiedlicher Länge über das dem Gegenkupplungsstück 4 abgewendete Ende des Rohrstückes 6´ in der Weise vorstehen, daß die Länge dieser Stahldrähte, die im übrigen den das Bündel 7 nach der Fig. 1 bildenden Stahldrähten hinsichtlich des verwendeten Materials, hinsichtlich des Einzeldrahtdurchmessers usw. entsprechen, zur Achse des Rohrstückes 6 hin zunimmt, so daß die

0158136

Länge des Bündels 7´ im Bereich der Achse des Rohrstückes 6´
größer ist als seitlich von dieser Achse, sich also eine Art
Büschelform für das Bündel 7´ ergibt. Sowohl bei der in der Fig. 1.
als auch bei der in der Fig. 2 dargestellten Ausführungsform
liegen die das jeweilige Bündel 7 bzw. 7´ bildenden Stahldrähte
mit ihrer Längserstreckung achsgleich bzw. parallel zur Achse, die
das Rohrstück 6 bzw. 6´ an seinem dem Gegenkupplungsstück 4
entfernt liegenden Ende aufweist.

Während das Werkzeug 5 mehr für eine großflächige Reinigung von
Zähnen bzw. deren Kaufflächen einschließlich von Unebenheiten und
Füllungen geeignet ist, eignet sich das Werkzeug 5´ vor allem auch
für eine besonders einfache Reinigung bzw. Behandlung von Zähnen
im Bereich von Zahnzwischenräumen.

Die Erfindung wurde voranstehend an einem Ausführungsbeispiel
beschrieben. Es versteht sich, daß Änderungen sowie Abwandlungen
möglich sind, ohne daß dadurch der der Erfindung zugrunde liegende
Gedanke verlassen wird. Weiterhin versteht es sich, daß die
Erfindung auch auf anderen Gebieten in vorteilhafter Weise
eingesetzt werden kann, z.B. für Reinigungs- und/oder Polierzwecke
in der Schmuck- oder Uhrenindustrie.

D158136

Patentansprüche:

1. Ultraschallgerät, insbes. im Ultraschall-Bereich arbeitendes Dentalgerät, zum Reinigen, Polieren und/oder Schleifen, bestehend aus einem eine Arbeitsfläche bzw. einen Arbeitsbereich aufweisenden Werkzeug sowie aus einer Werkzeughalterung, insbes. Dentalhandstück, in welcher bzw. in welchem zur Erzeugung einer mechanischen Schwingung im Ultraschallbereich ein elektro-mechanischer Wandler vorgesehen ist, mit dem das Werkzeug kraftschlüssig verbunden ist, **dadurch gekennzeichnet,** daß das Werkzeug (5, 5´) zumindest an seinem die Arbeitsfläche bildenden Ende von einer Vielzahl zu einem Bündel (7, 7´) zusammengefaßten Einzeldrähten aus Stahl besteht.

2. Ultraschallgerät nach Anspruch 1, dadurch gekennzeichnet, daß das Werkzeug (5, 5´) abnehmbar an einem mechanischen Schwingungserzeuger des elektro-mechanischen Wandlers (2) befestigt ist.

3. Ultraschallgerät nach Anspruch 1 oder 2, dadurch gekennzeichnet, daß die Länge der Stahldrähte so gewählt ist, daß die freien Enden dieser Stahldrähte eine im wesentlichen geradflächige Arbeitsfläche bilden.

4. Ultraschallgerät nach Anspruch 1 oder 2, dadurch gekennzeichnet, daß die das Bündel (7) bildenden Stahldrähte unterschiedliche Längen in der Form aufweisen, daß die freien Enden dieser Stahldrähte einen sich im Querschnitt verjüngenden Arbeitsbereich vorzugsweise mit halbkugelförmiger oder ellipsoider oder teilellipsoider Arbeitsfläche bilden.

5. Ultraschallgerät nach einem der Ansprüche 1 - 4, dadurch gekennzeichnet, daß das Werkzeug (5, 5´) von einem Rohrstück (6, 6´) gebildet ist, welches an einem Ende das Bündel (7, 7´) aus Stahldrähten trägt und einen durchgehenden Kanal (8) zum

0158136

Zuführen eines Kühl-, Schleif- und/oder Poliermittels an den Arbeitsbereich des Werkzeuges bildet.

6. Ultraschallgerät nach Anspruch 5, dadurch gekennzeichnet, daß die das Bündel (7, 7´) bildenden Stahldrähte in das Rohrstück (6, 6´) hineinreichen.

7. Ultraschallgerät nach einem der Ansprüche 1 - 6, dadurch gekennzeichnet, daß die das Bündel (7, 7´) bildenden Stahldrähte einen Einzeldrahtdurchmesser von 0,2 - 0,3 mm aufweisen.

Fig.1

Fig.2

1/1

0158136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 375 820 (KURIS et al.) * Spalte 4, Zeile 27 - Spalte 7, Zeile 57; Figuren 1-5 * | 1,2 | A 61 C 17/02 |
| A | US-A-3 547 110 (BALAMUTH) * Figuren 9,12 * | 1,2 | |
| A | US-A-3 593 425 (ROBINSON) * Spalte 2, Zeile 65 - Spalte 3, Zeile 3; Figur 11 * | 1,5 | |
| A | US-A-1 889 494 (PRIEST) * Figuren 1-4 * | 3,4 | |
| A | US-A-3 636 947 (BALAMUTH) | | |
| A | US-A-1 889 495 (PRIEST) | | |

**RECHERCHIERTE SACHGEBIETE (Int. Cl.4)**

A 61 C 1/00
A 61 C 3/00
A 61 C 17/00
B 24 B 1/00

Der vorliegende Recherchenbericht wurde für alle Patentansprüche erstellt.

| Recherchenort BERLIN | Abschlußdatum der Recherche 06-06-1985 | Prüfer SIMON J J P |
|---|---|---|